# EUROPEAN PATENT APPLICATION

(11) **EP 1 952 941 A1**
(43) Date of publication of application: **06.08.2008**
(21) Application number: 08100519.1
(22) Date of filing: 16.01.2008
(51) Int. Cl.: B23Q 11/08, E06B 9/13

(54) **Roll-up protective device for slideways of elements of machines or systems**

(30) Priority: 31.01.2007 IT BO20070060
(71) Applicant: P.E.I. Protezioni Elaborazioni Industriali S.r.l., 40012 Calderara di Reno (Bologna) (IT)
(72) Inventor: Benedetti, Michele, 40132 Bologna (IT)
(74) Representative: Lanzoni, Luciano

(57) **Abstract**

A roll-up protective device (4) for slideways (3) of elements (2) of machines or systems has a belt (5), at least partly made of steel, which is rolled up on a roller (6) and, at a free end, has an end link (8) for fixing to an operating element (2); the belt (5) has a plurality of discontinuity of form lines (L) which are permanent deformation impressions that give the belt (5) a multiple arch configuration.

## Description

The present invention relates to a roll-up protective device for slideways of elements of machines or systems.

In machine tools, in automated machines and in robotised systems widespread use is made of protective devices to shield the slideways of moving operating elements.

As well as having an accident prevention function, such protective devices are also designed to prevent foreign bodies, such as dirt, shavings, dust from machining or emulsions for cooling the machining, from infiltrating the slideways and compromising their correct operation.

The protective device in accordance with the present invention is of the type comprising a belt rolled up on a roller and having, at a free end, an end link for fixing to an operating element.

In general, in a protective device made in this way, after the operating element has moved, the belt is unrolled from the roller, or rolled up around it, whilst the roller is subject to the returning action of one or more springs.

The belt may be made of stainless steel or of fabric, depending on the materials, solids or liquids, for which it must act as a shield.

In general, the use of steel is preferably limited to those cases in which small belts are required and/or cases requiring belts with a high thermal resistance to both low and high temperatures, whilst in all other cases a multi-layer fabric is preferably used, for example with a core made of polyester, polyamide or Kevlar^{®} and a coating made of neoprene^{®}, polyurethane or PVC.

One of the causes of this limitation is the fact that, beyond a predetermined flat extension, prior art steel belts, usually made to be between 0.2 and 0.4 mm thick, since with thicknesses outside said range they would be too deformable if subject to impacts or too rigid, are affected by unsightly waving, caused by inner tensioning deriving from the cold-rolling process with which the belts are obtained. This waving is also made very noticeable by the metal reflections of the surface of the belts.

The present invention has for an aim to provide a roll-up protective device for slideways of elements of machines or systems in which the belt, at least partly made of steel, is free of the waves described above, irrespective of its flat extension.

Accordingly the present invention provides a roll-up protective device for slideways of elements of machines or systems as described in the claims herein.

The present invention is now described, by way of example and without limiting the scope of application, with reference to the accompanying drawings, in which:
- Figure 1 is a perspective view of a machine tool equipped with a pair of protective devices made in accordance with the present invention;
- Figures 2 and 3 illustrate respective details of a first embodiment of any of the protective devices of Figure 1;
- Figures 4 and 5 illustrate respective details of another embodiment of any of the protective devices of Figure 1;
- Figure 6 is a schematic view of part of a machine for making what is shown in Figures 2 and 3, or 4 and 5; and
- Figure 7 shows part of a machine for making an alternative embodiment of what is shown in Figures 2 and 3, or 4 and 5.

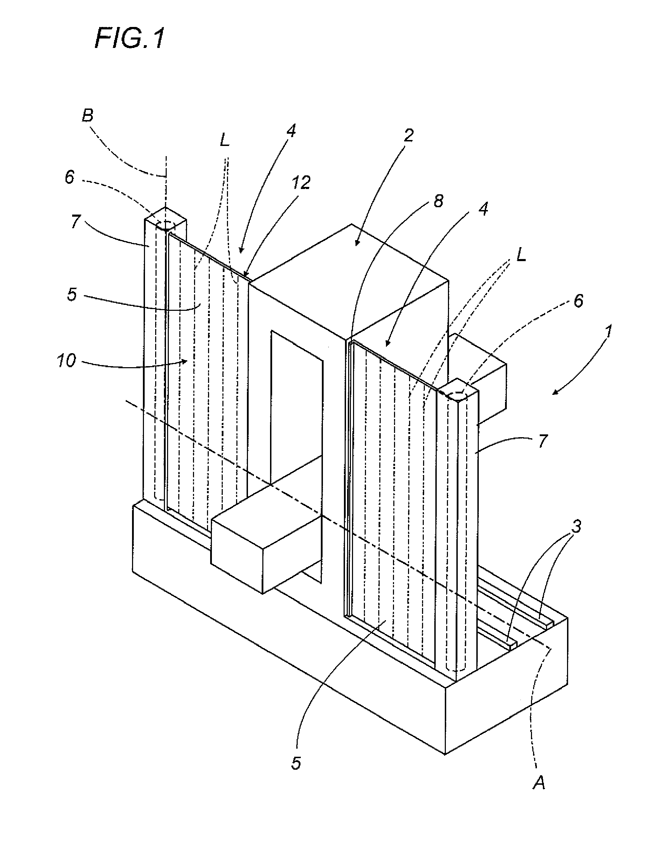

In Figure 1 the numeral 1 denotes a machine tool, of the known type and therefore not described in detail, equipped with an operating element 2 able to move in a predetermined direction A along two slideways 3 which are parallel with one another.

In the example illustrated, the direction A is horizontal, however, in alternative embodiments not illustrated, it may be vertical, or set at any angle to a horizontal plane.

Two identical roll-up protective devices 4 are associated with the operating element 2 in such a way that they mirror one another.

Each protective device 4 comprises a belt 5, rolled up on a roller 6 which has a fixed vertical axis of rotation B. Each roller 6 is preferably housed in a protective box 7.

The function of each belt 5 is to shield the slideways 3 and prevent foreign bodies, such as dirt, shavings, dust from machining or emulsions for cooling the machining, from being deposited on the slideways 3 and compromising their correct operation.

At a free end, each belt 5 has an end link 8 for fixing to a respective side of the operating element 2, and each roller 6 is subject to the returning action of one or more springs, not illustrated, so that, after the operating element 2 has moved in the direction A, one of the two belts 5 is unrolled from the respective roller 6, whilst the other is simultaneously rolled up by the matching amount.

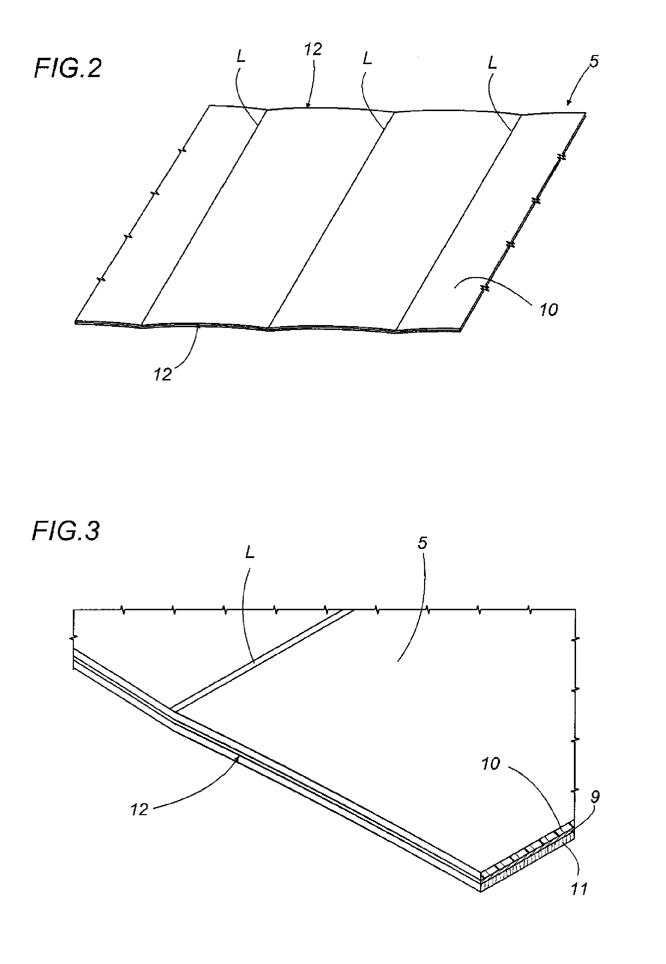

As shown in Figure 3, each belt 5 has a multi-layer structure comprising three layers, with one central layer 9 made of a polymer, one surface layer 10 made of stainless steel and the other surface layer 11, opposite the layer 10, made of fabric or a plastic material. The layer 10 acts as a protective shield, the layer 11 acts as a structural element and the layer 9 acts as a strong joining element between the layers 10 and 11.

The distinctive feature of each belt 5 is the fact that, as seen more clearly in Figure 2, it has a plurality of discontinuity of form lines L, by means of which the belt 5 is locally stiffened.

The lines L are continuous and straight. They are parallel with and equidistant from one another, and they are at right angles to the lateral edges 12, or sides, of the belt 5. In practice, the lines L are therefore transversal to the direction A of movement of the element 2, as well as belt 5 rolling up and unrolling.

The lines L are impressions, obtained by means of an embossing process, where the belt 5 is permanently deformed. After said deformation, the belt 5 has the shape of an arch between each pair of lines L. Specifically, around each line L, the belt 5 is concave on the side of the surface layer 10 made of steel, with matching convexity on the side of the surface layer 11 made of fabric or plastic material.

It should be noticed that the term "arch" used herein, although normally associated with an object lying in a substantially horizontal plane, is irrespective of the plane in which the belt 5 lies in practice, which in the above example is vertical.

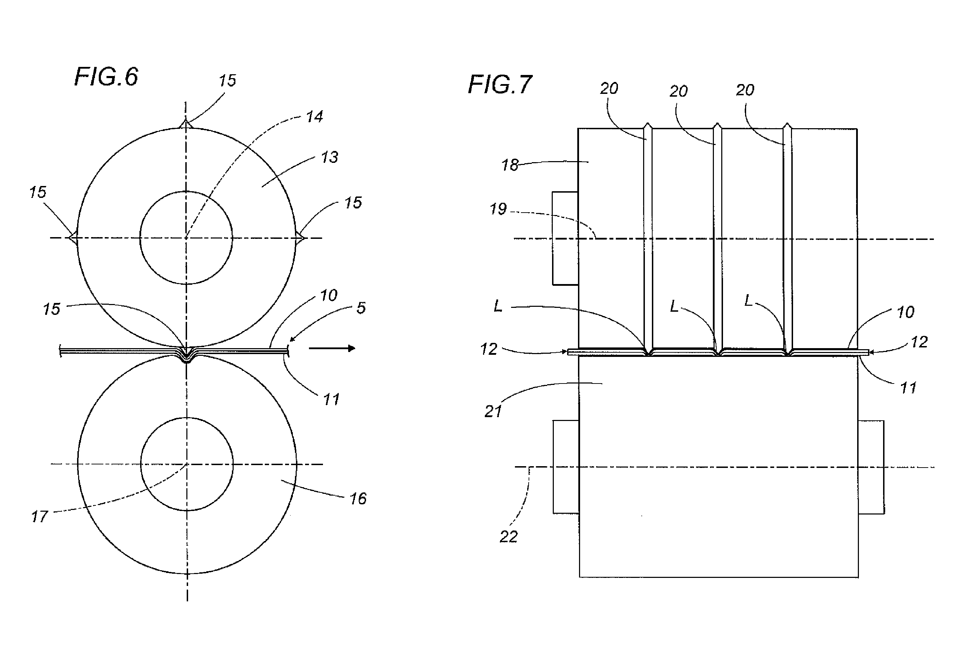

As illustrated in Figure 6, the above-mentioned embossing process is carried out by means of a pair of embossing rollers, and specifically by means of a roller 13, rotating about a central axis 14 and equipped at its outer edge with a plurality of punches 15 parallel with the axis 14, and by a counter-roller 16, made of a resilient material and rotating about an axis 17 parallel with the axis 14.

In said process, in which the belt 5 passes between the roller 13 and the counter-roller 16 with its edges 12 at right angles to the axes 14 and 17, the surface layer 10 made of steel is cyclically in contact with the punches 15, bending locally around them, whilst the surface layer 11 made of fabric or plastic material is continuously in contact with the counter-roller 16.

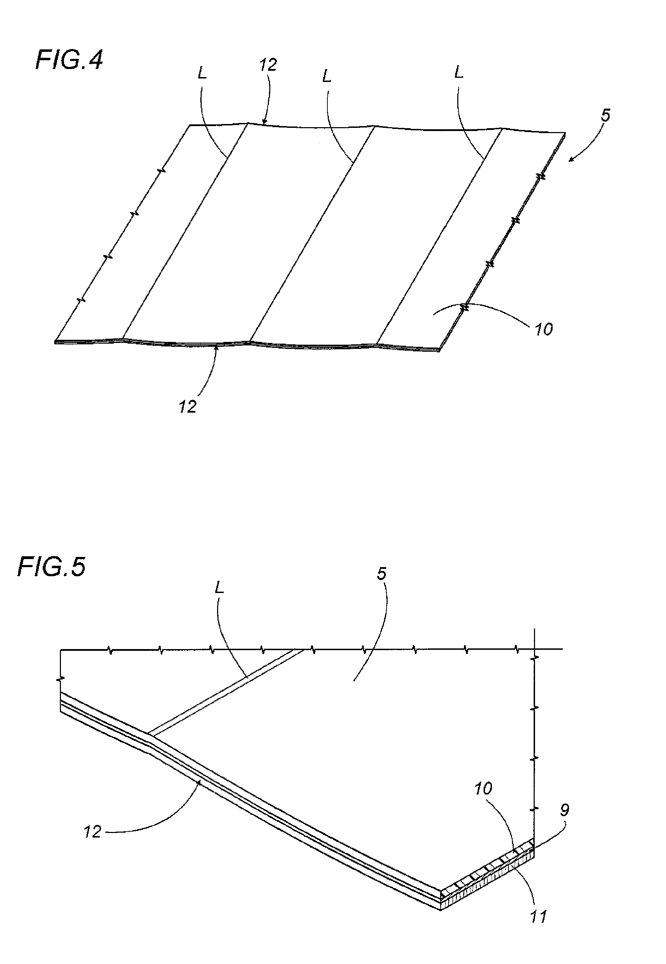

According to an alternative embodiment, the belt 5 is embossed with the surface layers inverted, that is to say, with the layer 11 cyclically in contact with the punches 15, and with the layer 10 continuously in contact with the counter-roller 16. In said case, as shown in Figures 4 and 5, around each discontinuity line L, the belt 5 is concave on the side of the surface layer 11 made of fabric or plastic material, with matching convexity on the side of the surface layer 10 made of steel, maintaining a multiple arch configuration, but with the arches upside down.

According to another alternative embodiment, illustrated in Figure 7, the lines L are parallel with the lateral edges 12 of the belt 5. In this case the embossing process is carried out by a different pair of embossing rollers, specifically by a roller 18, rotating about a central axis 19 and equipped at its outer edge with a plurality of annular punches 20, parallel with and equidistant from one another, and a counter-roller 21, made of a resilient material and rotating about an axis 22 parallel with the axis 19.

In said process, in which the belt 5 passes between the roller 18 and the counter-roller 21 with its edges 12 at right angles to the axes 19 and 22, the surface layer 10 made of steel is continuously in contact with the punches 20, whilst the surface layer 11 made of fabric or plastic material is continuously in contact with the counter-roller 21. According to alternative embodiments not illustrated, the embossing processes described above are substituted by bending processes, with which the belt 5 is permanently deformed, that is to say, bent, along the lines L.

According to another alternative embodiment, not illustrated, the belt 5 is completely made of steel.

Obviously, the invention described above achieves the preset aims and it may be modified and adapted in several ways without thereby departing from the scope of the inventive concept indicated in the claims herein. Moreover, all details of the invention may be substituted by technically equivalent elements.

## Claims

1. A roll-up protective device for slideways of elements of machines or systems, comprising a belt (5), at least partly made of steel, at a free end having an end link (8) for fixing to an operating element (2); the device (4) being **characterised in that** the belt (5) has a plurality of discontinuity of form lines (L), by means of which the belt (5) is locally stiffened.

2. The protective device according to claim 1, **characterised in that** the discontinuity lines (L) are permanent deformation lines.

3. The protective device according to claim 2, **characterised in that** the permanent deformation lines (L) are obtained by means of a bending process.

4. The protective device according to claim 2, **characterised in that** the permanent deformation lines (L) are impressions obtained by means of an embossing process.

5. The protective device according to any of the claims from 1 to 4, **characterised in that** the discontinuity lines (L) are continuous and straight.

6. The protective device according to claim 5, **characterised in that** the discontinuity lines (L) are parallel with one another.

7. The protective device according to claim 6, **characterised in that** the discontinuity lines (L) are equidistant from one another.

8. The protective device according to any of the claims from 5 to 7, **characterised in that** the discontinuity lines (L) are at right angles to the lateral edges (12) of the belt (5).

9. The protective device according to any of the claims from 5 to 7, **characterised in that** the discontinuity lines (L) are parallel with the lateral edges (12) of the belt (5).

10. The protective device according to any of the claims from 1 to 9, **characterised in that** between each pair of discontinuity lines (L) the belt (5) has the shape of an arch.

11. The protective device according to any of the claims from 1 to 10, **characterised in that** the belt (5) is completely made of steel.

12. The protective device according to any of the claims from 1 to 10, **characterised in that** the belt (5) has a multi-layer structure, in which at least one of the two surface layers is made of steel.

13. The protective device according to any of the claims from 1 to 10, **characterised in that** the belt (5) has a multi-layer structure comprising three layers, having one central layer (9) made of a polymer, one surface layer (10) made of steel and the other surface layer (11) made of fabric or a plastic material.

14. The protective device according to claim 13, **characterised in that** around each discontinuity line (L), the belt (5) is concave on the side of the surface layer (10) made of steel, having matching convexity on the side of the surface layer (11) made of fabric or plastic material.

15. The protective device according to claim 13, **characterised in that** around each discontinuity line (L), the belt (5) is concave on the side of the surface layer (11) made of fabric or plastic material, having matching convexity on the side of the surface layer (10) made of steel.
